# EUROPEAN PATENT SPECIFICATION

(11) **EP 3 504 955 B1**
(45) Date of publication and mention of the grant of the patent: **30.06.2021**
(21) Application number: 18200396.2
(22) Date of filing: 15.10.2018
(51) Int. Cl.: A01D 69/03, A01D 34/69, A01D 34/64

(54) **GRASS MOWER**
RASENMÄHER
TONDEUSE À GAZON

(30) Priority: 28.12.2017 JP 2017253513
(43) Date of publication of application: 03.07.2019
(73) Proprietor: Kubota Corporation, Osaka-shi, Osaka 556-8601 (JP)
(72) Inventor: SHIBATA, Takashi, SAKAI-SHI, OSAKA, 5900823 (JP); TAKAOKA, Masaki, SAKAI-SHI, OSAKA, 5900823 (JP); KAWAMOTO, Ryusuke, SAKAI-SHI, OSAKA, 5900823 (JP); YAMASHITA, Akio, SAKAI-SHI, OSAKA, 5900823 (JP)
(74) Representative: Cabinet Beau de Loménie

(56) References cited:
- EP-A1- 2 130 709
- EP-A1- 2 143 315
- JP-A- 2014 119 108
- US-A1- 2013 298 546

## Description

### BACKGROUND OF THE INVENTION

### 1. Field of the Invention

The present invention relates to a grass mower having a mower device, a traveling device and a hydrostatic stepless speed changer device. The invention is applicable to a variety of grass mowers from large sized type to small sized type.

### 2. Description of the Related Art

In a grass mower disclosed in JP 2010-004748 A, a hydrostatic stepless speed changer device is constituted by using an axial plunger variable displacement type hydraulic pump and an axial plunger fixed displacement type hydraulic pump; and a power outputted from the hydraulic motor is inputted through a transmission case to right and left rear wheels.

With the above-described grass mower, since the hydrostatic stepless speed changer device is employed in its traveling driving system, smooth increase/decrease of the traveling speed is possible, but there remains room for improvement in following respects.

Namely, with this type of grass mower, its machine body per se is not so large, but the mower is sometimes used for a grass cutting work on a sloped land, or sometimes equipped with a grass collector having a large capacity. For these reasons, during a cutting work, the mower tends to require a relatively large torque even at a low speed. Further, a traveling state without involving a cutting work is generally used for traveling on a flat land and discharging stored cut grass for instance, so that traveling should be effected at a high speed as possible for the sake of work efficiency.

If speed increase/decrease of the traveling device is to be effected by an operation of the hydrostatic stepless speed changer device alone, in order to obtain sufficient speed increase/decrease range, a hydraulic pump having a significantly large discharge capacity will be needed as the hydrostatic speed changer device, thus inviting enlargement of the device.

Then, it is conceivable to avoid enlargement of the hydrostatic stepless speed changer device by inputting the power outputted from the hydraulic pump to e.g. a gear type auxiliary speed changer mechanism, aside from speed change by the hydrostatic stepless speed changer device, for effecting a speed change operation by such auxiliary speed changer mechanism. In this case, however, when the auxiliary speed change operation is to be carried out, such operation as temporarily stopping the machine body for effecting the speed change operation will be needed, so that it is difficult to carry out a work in an efficient manner. US 2013/298546 A1, EP 2 130 709 A1, EP 2 143 315 A1 and JP 2014 119108 A disclose other examples of grass mowers.

An object of the present invention is to realize high efficiency grass cutting work by allowing speed increase/decrease of a traveling device to be effected at a speed and power output suitable for the grass cutting work, while avoiding enlargement of the hydrostatic stepless speed changer device.

### SUMMARY OF THE INVENTION

In view of the above, a grass mower as follows is proposed:
a grass mower comprising:
   a traveling machine body having a traveling device;
   a mower device supported by the traveling machine body; and
   a hydrostatic stepless speed changer device for effecting a speed change of the traveling device, the speed changer device including:
      a hydraulic pump,
      a variable displacement type hydraulic motor, and
      a hydraulic actuator for changing a swash plate angle of the hydraulic motor;
   wherein there is provided a closed circuit which interconnects the hydraulic pump and the hydraulic motor; and an operational circuit is connected to a high-pressure side oil passage of the closed circuit for supplying a pilot pressure taken off the high-pressure side oil passage to the hydraulic actuator; and
   wherein the operational circuit is connected to a low-speed operation side of the hydraulic actuator so as to operate a swash plate of the hydraulic motor to a lower speed side in association with a pressure increase in the high-pressure side oil passage.

With this arrangement, the hydraulic motor is configured as a variable displacement type and to a high-pressure side oil passage of a closed circuit connecting a hydraulic pump to the hydraulic motor, there is connected an operational circuit for supplying a pilot pressure taken off the high-pressure side oil passage to a hydraulic actuator for changing a swash plate angle of the hydraulic motor.

The pilot pressure is supplied to a low-speed operational side of the hydraulic actuator so as to operate the swash plate of the hydraulic motor to its speed-reducing side, in association with a pressure increase in the high-pressure side oil passage, namely, in association with a rise in the traveling load. Whereby, the traveling speed of the machine body is operated to a speed decreasing side, but the output torque from the hydraulic motor is increased. As a result, at a place where a high-torque work is needed such as a grass cutting work on a sloped land, the traveling speed may be reduced to a lower speed, for allowing the grass cutting work to proceed in a reliable manner.

On the other hand, in case there is no pressure rise in the high-pressure side oil passage, namely, in case the traveling load is low, the supplying of the pilot pressure to the lower speed operational side of the hydraulic actuator is cancelled or released, whereby the hydraulic actuator is returned to a high-speed operational side, and the traveling speed of the machine body will be operated to a high speed side in accordance with an operational amount of the hydraulic motor. Therefore, on a flat land traveling or the like which provides low traveling load, such work as transporting cut grass to a discharging location by high speed traveling can be readily carried out in an efficient manner.

In this way, with speed change of the hydraulic motor according increase/decrease in the traveling load, selection between a low speed traveling placing priority over output torque or a high speed traveling placing priority on traveling speed over output torque can be made speedily via an increasing/decreasing operation on the hydraulic stepless speed changer device. Therefore, even with a hydrostatic stepless speed changer device having a relatively small speed increasing/decreasing range on the hydraulic pump side, a high-torque low-speed traveling suitable for a grass cutting work on a sloped land or the like and a low-torque high-speed traveling suitable for a grass cutting work on a flat land can be selectively provided. Thus, grass cutting works can be carried out in an efficient manner with avoiding enlargement of the hydrostatic stepless speed changer device.

In the above-described arrangement, preferably, the hydraulic pump is of a variable displacement type, too, in addition to the hydraulic motor.

The hydraulic actuator includes an operational mechanism for urging the swash plate of the hydraulic motor to be returned to a high speed side.

With this arrangement, since the hydraulic actuator per se includes an operational mechanism for urging the swash plate of the hydraulic motor to be returned to a high speed side, there is no need to provide the hydraulic actuator with a pilot oil passage dedicated to return operation separately from the pilot oil passage for speed reducing operation, or to provide such additional component as a pressure sensor, an electric controller or the like. Thus, the arrangement can be further simpler.

The operational mechanism is formed of a spring; and the hydraulic actuator is arranged such that an operational piston and the spring are disposed on opposite sides across the swash plate.

Further and other features and advantages thereof will become apparent upon reading the following description.

### BRIEF DESCRIPTION OF THE DRAWINGS

Fig. 1 is an overall side view showing a riding type grass mower according to one embodiment,
Fig. 2 is a schematic explanatory view showing a power transmission arrangement in a traveling driving system of the riding type grass mower,
Fig. 3 is a section view showing a hydrostatic stepless speed changer device, and
Fig. 4 is a hydraulic circuit diagram showing an operational system of the hydrostatic stepless speed changer device.

### DETAILED DESCRIPTION OF PREFERRED EMBODIMENT

Next, one embodiment will be described.

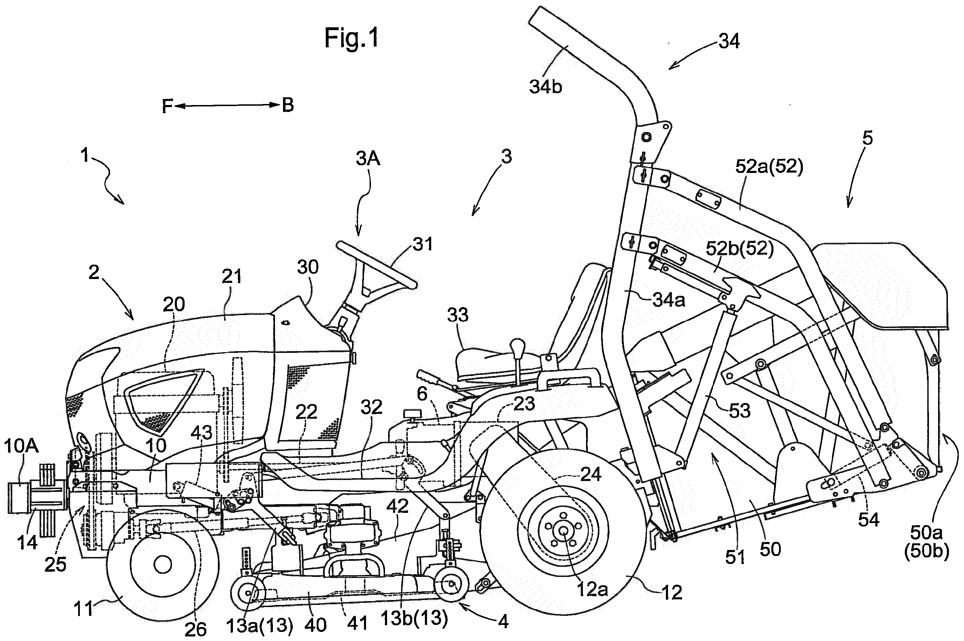

Unless indicated explicitly otherwise, it is understood that the forward traveling direction of a grass mower at time of a work traveling (see arrow F in Fig. 1) represents the "front", the reverse traveling direction represents the "rear" and the right side represents the "right" and the left side represents the "left" relative to a forward oriented posture in the front/rear direction, respectively.

### [General Configuration of Riding Type Grass Mower]

Fig. 1 shows an overall side view of a riding type grass mower as an example of a grass mower. In this riding type grass mower, on a front side of a machine body frame 10 of a traveling machine body 1, there are provided a pair of right and left steerable front wheels 11, 11 (corresponding to "traveling device"); and on a rear side thereof, there are provided a pair of right and left drivable rear wheels 12, 12 (corresponding also to "traveling device"), so that the machine can be self-propelled.

Beneath the machine body frame 10 and between the front wheels 11 and the rear wheels 12 in the front/rear direction, a rear discharge type mower device 4 is suspended to be liftable up/down. On a rear side of this traveling machine body 1, there is provided a grass collecting device 5 (corresponding to "work implement") for accommodating grass clippings having cut by the mower device 4 (corresponding to "work implement").

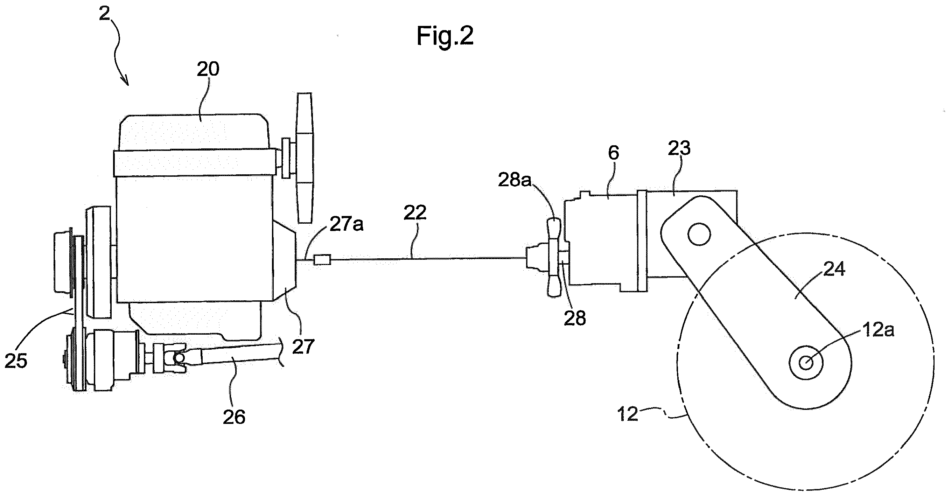

As shown in Fig. 1 and Fig. 2, on the machine body frame 10 of the traveling machine body 1, an engine section 2 is provided at its front portion and a riding driving section 3 is provided on the rear side of the engine section 2.

At the engine section 2, an engine 20 is mounted on the machine body frame 10 as being accommodated within an engine hood 21. Power taken from the rear side of the engine 20 is inputted via a main transmission shaft 22 to a hydrostatic stepless speed changer device 6 disposed at a rear positon thereof; and an output from the hydrostatic stepless speed changer device 6 is transmitted, through a transmission case 23 accommodating a gear transmission mechanism 23A, to rear axles 12a supported by right and left rear axle cases 24 for driving the rear wheels 12.

A steering operation of the front wheels 11 is effected by a power steering device (not shown) operated in response to an operation of a steering wheel 31 provided at the riding driving section 3.

From the front side of the engine 20, power for a work (work implement) can be taken off. More particularly, on the front side of the engine 20, there is provided a PTO (power takeoff) mechanism 25 constituted of a belt transmission mechanism and via a PTO shaft 26 included in the PTO mechanism 25, power of the engine 20 is transmitted to the mower device 4.

At the riding driving section 3 on the rear side of the engine section 2, there are provided a control panel 30 disposed continuously with a rear side of the engine hood 21, and a maneuvering section 3A including the steering wheel 31, etc. On the rear side of the maneuvering section 3A, there is provided a driver's seat 33 upwardly of an access step 32 disposed at the foot portion; and at a rear portion of this driver's seat 33, a rollover protection structure (ROPS) 34 is mounted vertically.

The ROPS 34 has a portal shape as seen in a front view thereof; and to a pair of right and left ROPS bases (not shown) provided integrally at rear end portions of the machine body frame 10, there are connected and fixed lower sides of pillar-like leg portions 34a, 34a disposed on the right and left opposed sides. Upper end sides of the right and left pillar-like leg portions 34a, 34a are interconnected via a portal-shaped upper frame 34b, thus covering the upper side of the driver's seat 33.

At the front portion of the machine body frame 10, there is provided a guard frame 10A acting as a protective member for the machine body front portion.

The guard frame 10A is provided with a balance weight attaching portion 14 to which a plurality of balance weights can be attached.

### [Mower Device]

The mower device 4 includes a housing 40 which is suspended from the machine body frame 10 to be liftable up/down via a link mechanism 13 having pairs of front links 13a and rear links 13b on the right and left opposed sides.

In the link mechanism 13, to upper end portions of the front links 13a, a mower lift cylinder 43 is connected. In association with an expanding/contracting operation of the mower lift cylinder 43, a vertical height position of the housing 40 relative to the machine body frame 10 can be changed.

Inside the housing 40, there are mounted a pair of right and left rotary blades 41, 41. The respective rotary blades 41 are driven to rotate at an equal speed about vertical axes with rotational paths thereof being partially overlapped with each other, whereby grass or the like will be cut, and under a conveying wind generated in association with the rotational motion, cut grass clippings may be discharged to the rear side via a discharge opening (not shown) formed at a rear portion of the housing 40.

### [Grass Collecting Device]

As shown in Fig. 1 and Fig. 2, the grass collecting device 5 includes a grass collecting container 50 for accommodating cut grass clippings, and a lift drive mechanism 51 for allowing lifting up/down operations of the grass collecting container 50 relative to the traveling machine body 1, as well as grass discharging operation thereof.

The grass collecting container 50 has, on its front end side, a receiving opening (not shown) for receiving cut grass clippings fed from the mower device 4 side via a conveying duct 42; and on its rear end side, a discharging opening 50a for discharging and an opening/closing lid 50b for covering this discharging opening 50a.

The grass collecting container 50 includes: a lift link 52 which connects the grass collecting container 50 to the ROPS 34 provided on the rear side of the traveling machine body 1; lift cylinders 53 for lifting up/down the lift link 52 relative to the ROPS 34; and dump cylinders 54 for changing the posture of the grass collecting container 50 from a nearly horizontal collecting posture to a rearwardly downward rear inclined posture so as to open/close the opening/closing lid 50b of the grass collecting container 50.

The lift link 52 includes a pair of right and left upper links 52a and a pair of right and left lower links 52b, with front end sides of the respective upper links 52b and lower links 52b being detachably connected to upper portions of the ROPS 34, and with rear sides thereof being connected to lower portions adjacent the rear end of the grass collecting container 50. Upper end portions of the lift cylinders 53 constituted of hydraulic cylinders are connected to the lower links 52b, so that in response to an expanding/contracting movement of the lift cylinders 53, the lift link 52 is pivoted to elevate or lower the grass collecting container 50.

The dump cylinders 54 constituted of hydraulic cylinders are disposed downwardly of the rear end side of the grass collecting container 50. One end portions of the dump cylinders 54 are connected to a well-known dump operation mechanism (not shown), so that in response to an expanding/contacting movement of the dump cylinders 54, the grass collecting container 50 can be selectively operated into a discharging posture in which the grass collecting container 50 is turned over to be inclined rearwards, and a collecting posture in which the grass collecting container 50 is disposed nearly horizontal.

The above-described lift cylinders 53, and the dump cylinders 54 as well, are one-paired right and left, respectively; and the cylinders 53, 54 are included in a hydraulic circuit for the grass collecting device 5 to be simultaneously operable on the right and left sides.

### [Traveling Driving System]

The power transmission system from the engine 20 to the rear wheels 12 is configured as follows.

As shown in Fig. 1 and Fig. 2, a clutch housing 27 is provided continuously at the rear portion of the engine 20; and power of the engine 20 is taken off via an output shaft 27a of the clutch housing 27. The main transmission shaft 22 is connected to the rear end portion of the output shaft 27a of the clutch housing 27 to be rotatable therewith; and to the rear end portion of the main transmission shaft 22, there is connected a pump shaft 60a acting as an input shaft of the hydrostatic stepless speed changer device 6.

The main transmission shaft 22 and the pump shaft 60a are interconnected via a connector tool 28 having a cooling fan 28a. The cooling fan 28a is provided for feeding cooling air to the hydrostatic stepless speed changer device 6.

A motor shaft 61a, acting as an output shaft of the hydrostatic stepless speed changer device 6, is inserted into the transmission case 23 accommodating the gear transmission mechanism 23A, so that a speed-changed power is transmitted into the transmission case 23. The power transmitted from the hydrostatic stepless speed changer device 6 is transmitted in distribution to the right and left rear axle cases 24 via a differential mechanism 23B accommodated inside the transmission case 23, and then transmitted to the rear axles 12a supported by the right and left rear axle cases 24, whereby the rear wheels 12 are driven.

### [Hydrostatic Stepless Speed Changer Device]

Next, the hydrostatic stepless speed changer device 6 provided in the traveling driving system and its hydraulic driving circuit will be described.

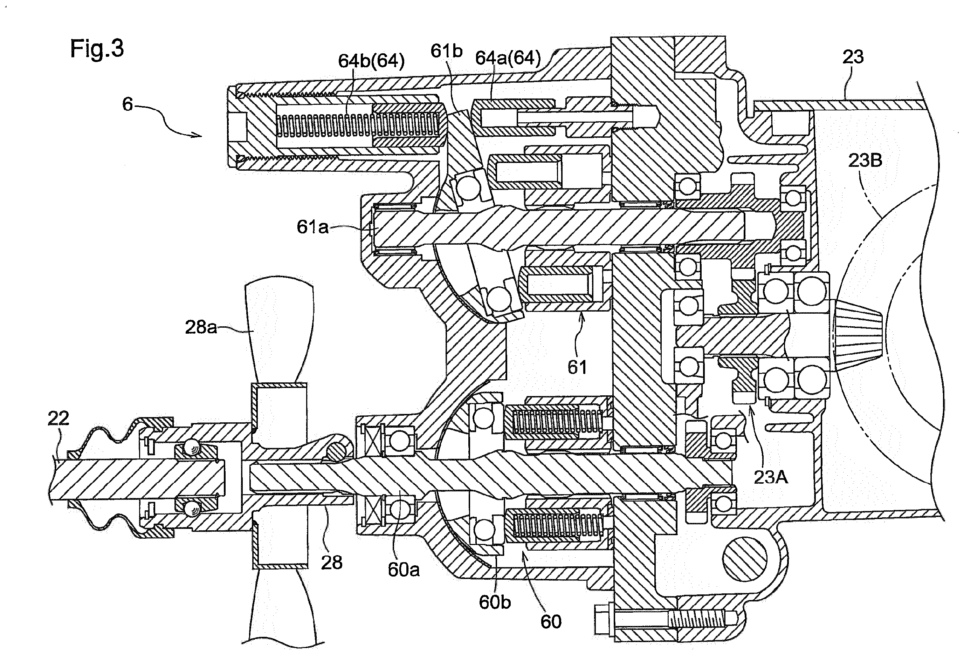

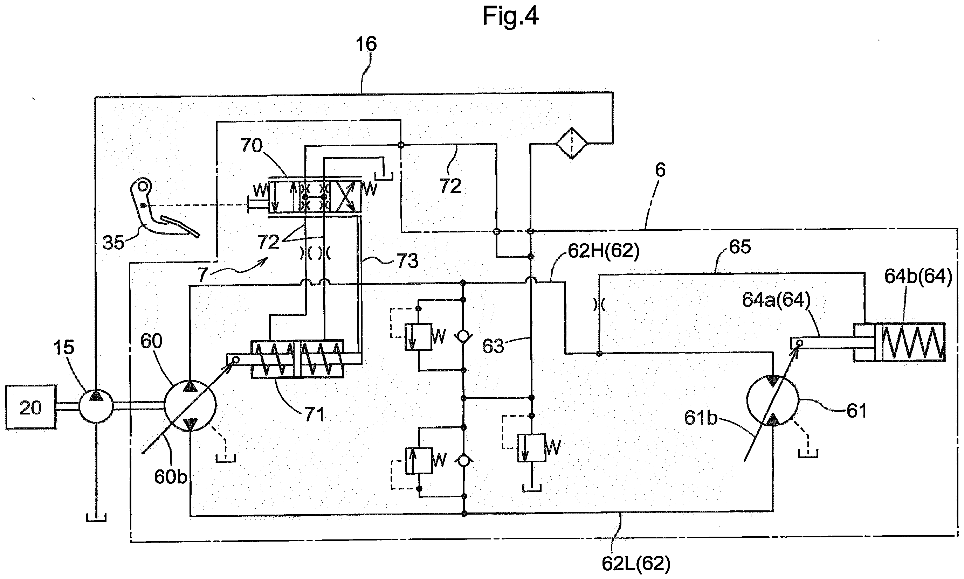

As shown in Fig. 3 and Fig. 4, the hydrostatic stepless speed changer device 6 includes: an axial plunger type and variable displacement type hydraulic motor 60 having the pump shaft 60a; an axial plunger type and variable displacement type hydraulic motor 61 having the motor shaft 61a; and a closed circuit 62 interconnecting the hydraulic pump 60 and the hydraulic motor 61 (see Fig. 4).

The closed circuit 62 interconnecting the hydraulic pump 60 and the hydraulic motor 61 includes a high-pressure side oil passage 62H for feeding pressure oil from the hydraulic pump 61 to the hydraulic motor 61, and a low-pressure side oil passage 62L for returning the pressure oil from the hydraulic motor 61 to the hydraulic pump 60. A charge circuit 63 for replenishing an amount of pressure oil to the closed circuit 62 is connected to/between the high-pressure side oil passage 62H and the low-pressure side oil passage 62L.

The hydraulic pump 60 is driven by power of the engine 20 together with a pressure oil feeding pump 15. An angle change of a swash plate 60b of the hydraulic pump 60 is done by an operator who controls a speed changer pedal 35 (see Fig. 4) disposed at the foot of the riding driving section 3. More particularly, the swash plate 60b of the hydraulic pump 60 is operably coupled to the speed changer pedal 35 via a hydraulic servo mechanism 7.

The hydraulic servo mechanism 7, as shown in Fig. 4, includes: a servo valve 70 operably coupled to the speed changer pedal 35; and a servo cylinder 71 operably coupled to the swash plate 60b, so that in response to a stepping-on operation on the speed changer pedal 35, an operational oil passage 72 to the servo cylinder 71 can be switched over. With this arrangement, in response to release of the stepping-on operation on the speed changer pedal 35, as shown in Fig. 3, the swash plate 60b of the hydraulic pump 60 is returned to and maintained at its neutral (0 degree), so that no discharge of pressure oil from the hydraulic pump 60 occurs, thus realizing a traveling stopped state.

As the speed changer pedal 35 is stepped on progressively, the servo valve 70 feeds the pressure oil from the pressure oil feeding pump 15 to the servo cylinder 71 via the operational oil passage 72. In response thereto, the servo cylinder 71 is driven to change the swash plate angle of the hydraulic pump 60, whereby the driving speed of the hydraulic pump 60 is changed correspondingly, thus changing a speed state of the hydraulic stepless speed changer device 6 correspondingly as well. In the course thereof, the operation of the servo cylinder 71 is fed back to the servo valve 70 via a feedback mechanism 73. Thus, when the hydraulic stepless speed changer device 6 becomes a control target speed state corresponding to the operated position of the speed changer pedal 35, the servo valve 70 will be switched to the neutral state and the hydrostatic stepless speed changer device 6 will be maintained at this control target speed state.

The pressure oil feeding pump 15 is connected via a pressure oil feeding circuit 16 to the charge circuit 63 for replenishing an amount of pressure oil to the closed circuit 62, thus effecting replenishment of the pressure oil. To this pressure oil feeding circuit 16, the operational oil passage 72 of the hydraulic servo mechanism 7 is also connected, thus allowing feeding of pressure oil to the servo cylinder 71. For this reason, the system pressure of the hydraulic servo mechanism 7 is set equal to the charge pressure.

The swash plate 61b of the hydraulic motor 61 is operated by a hydraulic actuator 64 in form of a hydraulic piston. As shown in Fig. 3, The hydraulic actuator 64 comprises a combination of an operational piston 64a and a return spring 64b (corresponding to "operational mechanism" for urging the swash plate 61b to be returned to a high speed side); and the operational piston 64a and the return spring 64b sandwich the swash plate 61b from the front and rear sides thereof. Incidentally, in the hydraulic circuit diagram shown in Fig. 4, the hydraulic actuator 62 is shown with reference marks of the operational piston 64a and the return spring 64b being disposed in opposition to each other within a single cylinder. In actuality, however, as shown in Fig. 3, the operational piston 64a and the return spring 64b are disposed on the opposed sides across the swash plate 61b to sandwich it therebetween.

In operation, when the operational piston 64a of the hydraulic actuator 64 is retracted to the front side movement limit thereof, the angle of the swash plate 61b of the hydraulic motor 61 becomes the neutral (0 degree). As the operational piston 64a advances rearwards against the force of the return spring 64b, the angle of the swash pate 61b is increased progressively in correspondence therewith. Incidentally, the return spring 64b is assembled with an initial compression thereof, thus urging the swash plate 61b toward the neutral side with a set urging force.

As shown in Fig. 4, the above-described hydraulic actuator 64 is connected via an operational circuit 65 to the high-pressure side oil passage 62H of the closed circuit 62 for feeding pressure oil from the hydraulic pump 60 to the hydraulic motor 61.

More particularly, the closed circuit 62 connects the hydraulic pump 60 to the hydraulic motor 61; and the operational circuit 65 is connected to the high-pressure side oil passage 62H of the closed circuit 62 for supplying a pilot pressure taken off (branched from) the high-pressure side oil passage 62H to the hydraulic actuator 64. The operational circuit 65 is connected to a low-speed operation side of the hydraulic actuator 64 so as to operate the swash plate 61b of the hydraulic motor 61 to a lower speed side in association with a pressure increase in the high-pressure side oil passage 62H.

With this arrangement, the angle of the swash plate 61b will be stabilized at a point where the pressure of the operational circuit 65 and the spring force of the return spring 64b are balanced with each other.

In operation, therefore, when the speed changer pedal 35 is stepped on, the angle of the swash plate 60b of the hydraulic pump 60 is increased also, so that an amount of pressure oil corresponding to the swash plate angle will be discharged to be fed to the hydraulic motor 61.

In the above, if the traveling load is relatively low and the pressure of the high-pressure side oil passage 62H is relative low, the operational piston 64a of the hydraulic actuator 64 receives the pressure from the high-pressure side oil passage 62H via the operational circuit 65. Whereby, the operational piston 64a is exposed to the resistance force of the initial spring force of the return spring 64b to maintain the angle of the swash plate 61b of the hydraulic motor 61 at a relatively small angle close to the neutral (0 degree), so that the grass mower will travel at a relatively high speed corresponding to the discharge amount of the hydraulic pump 60.

On the other hand, when the traveling load increases and the pressure of the high-pressure side oil passage 62H exceeds the set range of the initial force of the return spring 64, the operational piston 64a of the hydraulic actuator 64 exposed to the resistance force of the initial spring force of the return spring 64b will be operated toward increasing the angle of the swash plate 61b of the hydraulic motor 61 against the force of the return spring 64b.

Namely, when the traveling load increases to exceed the set range, the discharge amount from the hydraulic motor 61 will be increased to raise the output torque, whereby the motor shaft 61a will be driven at a reduced speed and the traveling speed of the machine body will be reduced correspondingly.

Incidentally, the speed changer pedal 35 for operating the hydrostatic stepless speed changer device 6 also functions as an accelerator pedal for operating a governor (not shown) provided at a rear portion of the engine 20.

Therefore, when the speed changer pedal 35 is stepped on, the rotational speed of the engine is increased and also the swash plate angle of the hydraulic pump 60 in the hydrostatic stepless speed changer device 6 is operated to the speed increasing side.

### [Other Embodiments]

The following other embodiments can be employed in any combination as desired.
[1] In the foregoing embodiment, there was disclosed the arrangement that change of the swash plate angle of the hydrostatic stepless speed changer device 6 is effected in operational coupling with a stepping-on operation on the speed changer pedal 35. The invention is not limited thereto. Instead, for instance, it is also possible to arrange such that change of the swash plate angle of the hydrostatic stepless speed changer device 6 is effected by an operation of a dedicated operational lever or the like.
[2] In the foregoing embodiment, there was disclosed the arrangement that the change of the swash plate angle of the hydrostatic stepless speed changer device is effected via the hydraulic servo mechanism 7. The invention is not limited thereto. Instead, such a hydraulic servo mechanism 7 may be omitted so that the change can be directly made by the speed changer pedal 35, an operational lever or the like.
[3] In the foregoing embodiment, the angle of the swash plate 61b of the hydraulic motor 61 is changed by the operational piston 64a and the return spring 64b of the hydraulic actuator 64. The invention is not limited thereto. Instead, it is also possible to change the angle of the swash plate 61b hydraulically, with using an actuator which is operated hydraulically on both the speed increasing side and the speed decreasing side.
[4] In the foregoing embodiment, the angle of the swash plate 61b is changed by a single hydraulic motor 61. The invention is not limited thereto.

Alternatively thereto, for instance, a plurality of hydraulic motors 61 can be employed. In this case, some of the plurality of hydraulic motors 61 can be configured as the fixed displacement type and the others can be configured as the variable displacement type, for changing the swash plate angle. Further alternatively, all of the hydraulic motors 61 can be configured as the variable displacement type for changing the angle of the swash plate 61b.

## Claims

1. A grass mower comprising:
a traveling machine body (1) having a traveling device (11, 12);
a mower device (4) supported by the traveling machine body (1); and
a hydrostatic stepless speed changer device (6) for effecting a speed change of the traveling device (11, 12), the speed changer device (6) including:
a hydraulic pump (60),
a variable displacement type hydraulic motor (61), and
a hydraulic actuator (64) for changing a swash plate angle of the hydraulic motor (61);
wherein there is provided a closed circuit (62) which interconnects the hydraulic pump (60) and the hydraulic motor (61); and an operational circuit (65) is connected to a high-pressure side oil passage (62H) of the closed circuit (62) for supplying a pilot pressure taken off the high-pressure side oil passage (62H) to the hydraulic actuator (64); **characterized in that** the operational circuit (65) is connected to a low-speed operation side of the hydraulic actuator (64) so as to operate a swash plate (61b) of the hydraulic motor (61) to a lower speed side in association with a pressure increase in the high-pressure side oil passage (62H);
wherein the hydraulic actuator (64) includes an operational mechanism (64b) for urging the swash plate (61b) of the hydraulic motor (61) to be returned to a high speed side;
wherein the operational mechanism (64b) is formed of a spring (64b); and
wherein the hydraulic actuator (64) is arranged such that an operational piston (64a) and the spring (64b) are disposed on opposite sides across the swash plate (61b).

2. The grass mower of claim 1, wherein the hydraulic pump (60) is of a variable displacement type.

## Patentansprüche

1. Rasenmäher, umfassend:
einen Fahrmaschinenkörper (1), der eine Fahrvorrichtung (11, 12) aufweist,
eine Mähvorrichtung (4), die von dem Fahrmaschinenkörper (1) gestützt wird, und
einen hydrostatischen stufenlosen Drehzahlwechsler (6) zum Herbeiführen einer Drehzahländerung der Fahrvorrichtung (11, 12), wobei der Drehzahlwechsler (6) umfasst:
eine Hydraulikpumpe (60),
einen Hydraulikmotor (61) mit variablem Hubraum und
einen hydraulischen Stellantrieb (64) zum Ändern eines Taumelscheibenwinkels des Hydraulikmotors (61),
wobei ein geschlossener Kreislauf (62) vorgesehen ist, der die Hydraulikpumpe (60) und den Hydraulikmotor (61) miteinander verbindet, und ein Betriebskreislauf (65) mit einer hochdruckseitigen Ölleitung (62H) des geschlossenen Kreislaufs (62) verbunden ist, um dem hydraulischen Stellantrieb (64) einen von der hochdruckseitigen Ölleitung (62H) erhaltenen Vorsteuerdruck zuzuführen,
**dadurch gekennzeichnet, dass**
der Betriebskreislauf (65) mit einer niedertourigen Betriebsseite des hydraulischen Stellantriebs (64) verbunden ist, um eine Taumelscheibe (61b) des Hydraulikmotors (61) auf einer niedertourigeren Seite zu betätigen, in Verbindung mit einem Druckanstieg in der hochdruckseitigen Ölleitung (62H),
wobei der hydraulische Stellantrieb (64) einen Betätigungsmechanismus (64b) aufweist, um zu bewirken, dass die Taumelscheibe (61b) des Hydraulikmotors (61) auf eine hochtourige Seite zurückgebracht wird,
wobei der Betätigungsmechanismus (64b) aus einer Feder (64b) besteht und
wobei der hydraulische Stellantrieb (64) so angeordnet ist, dass ein Arbeitskolben (64a) und die Feder (64b) auf gegenüberliegenden Seiten über der Taumelscheibe (61b) angeordnet sind.

2. Rasenmäher nach Anspruch 1, wobei die Hydraulikpumpe (60) vom Typ mit variabler Verdrängung ist.

## Revendications

1. Tondeuse à gazon comprenant :
un corps de machine mobile (1) ayant un dispositif de déplacement (11, 12) ;
un dispositif de tondeuse (4) supporté par le corps de machine mobile (1) ; et
un dispositif de changement de vitesse hydrostatique en continu (6) pour effectuer un changement de vitesse du dispositif de déplacement (11, 12), le dispositif de changement de vitesse (6) comprenant :
une pompe hydraulique (60),
un moteur hydraulique de type à cylindrée variable (61), et
un actionneur hydraulique (64) pour modifier un angle de plateau oscillant du moteur hydraulique (61) ;
dans laquelle est prévu un circuit fermé (62) qui interconnecte la pompe hydraulique (60) et le moteur hydraulique (61) ; et un circuit opérationnel (65) est raccordé à un passage d'huile côté haute pression (62H) du circuit fermé (62) pour fournir une pression pilote prélevée dans le passage d'huile côté haute pression (62H), à l'actionneur hydraulique (64) ;
**caractérisée en ce que** :
le circuit opérationnel (65) est raccordé à un côté de fonctionnement à faible vitesse de l'actionneur hydraulique (64) afin d'actionner un plateau oscillant (61b) du moteur hydraulique (61) à un côté à vitesse inférieure en association avec une augmentation de pression dans le passage d'huile côté haute pression (62H) ;
dans laquelle l'actionneur hydraulique (64) comprend un mécanisme opérationnel (64b) pour amener le plateau oscillant (61b) du moteur hydraulique (61) à revenir vers un côté à vitesse élevée ;
dans laquelle le mécanisme opérationnel (64b) est formé avec un ressort (64b) ; et
dans laquelle l'actionneur hydraulique (64) est agencé de sorte qu'un piston opérationnel (64a) et le ressort (64b) sont disposés sur les côtés opposés de part et d'autre du plateau oscillant (61b).

2. Tondeuse à gazon selon la revendication 1, dans laquelle la pompe hydraulique (60) est de type à cylindrée variable.
